# EUROPÄISCHE PATENTSCHRIFT

(11) **EP 1 447 195 B1**
(45) Veröffentlichungstag und Bekanntmachung des Hinweises auf die Patenterteilung: **17.08.2005**
(21) Anmeldenummer: 03027677.8
(22) Anmeldetag: 03.12.2003
(51) Int. Cl.: B28D 1/04, B23B 51/04

(54) **Bohrvorrichtung mit einem Hohlbohrer**
Drilling device with a core drill
Dispositif de forage avec un foret tubulaire

(30) Priorität: 12.02.2003 DE 10305707
(43) Veröffentlichungstag der Anmeldung: 18.08.2004
(73) Patentinhaber: Narex Ceska Lipa a.s., 47037 Ceska Lipa (CZ)
(72) Erfinder: Biedron, Ralf, 44879 Bochum (DE); Kirchner, Manfred, Dr., 73230 Neidlingen (DE)
(74) Vertreter: Reimold, Otto, Dr. Dipl.-Phys.

(56) Entgegenhaltungen:
- DE-A- 19 818 284
- DE-U- 29 907 717
- PATENT ABSTRACTS OF JAPAN vol. 016, no. 287 (M-1271), 25. Juni 1992 (1992-06-25) -& JP 04 075813 A (MIYANAGA:KK), 10. März 1992 (1992-03-10)

## Beschreibung

Die Erfindung betrifft eine Bohrvorrichtung gemäß Oberbegriff des Anspruchs 1 (siehe auch DE 198 18 284).

Mit solchen Bohrvorrichtungen werden beispielsweise zur Aufnahme von elektrischen Steck- oder Verteilerdosen dienende Sackbohrungen oder ganz durchgehende Bohrungen in Bauwerkswände gebohrt.

Bei einer aus der DE 198 18 284 A1 bekannten Bohrvorrichtung wird der Hohlbohrer mittels einer Bajonettverbindung am Bohrerhalter befestigt. Hierzu weist der Hohlbohrer L-förmige Mitnahmeausnehmungen auf, die mit am Bohrerhalter angeordneten, stiftförmigen Mitnahmeelementen in Eingriff gebracht werden. Die Mitnahmeausnehmungen werden von federnden Laschen begrenzt, an denen ein Buckel als hohlbohrerseitiges Rastmittel angeformt ist. Jedem Buckel ist am Bohrerhalter eine kleine Vertiefung als bohrerhalterseitiges Rastmittel zugeordnet.

Um den starken Belastungen, die beim Bohren auftreten, standzuhalten, muss die Verbindung zwischen dem Hohlbohrer und dem Bohrerhalter entsprechend stabil sein. Dies lässt sich alternativ zur DE 198 18 284 A1 auch mit Befestigungsmitteln in Gestalt von Schrauben oder dergleichen erreichen. Diese Befestigungsmittel erfordern jedoch die Anwendung von Handwerkzeugen. Dies ist verhältnismäßig umständlich. Außerdem ist nicht stets sofort das benötigte Handwerkzeug zur Stelle.

Ein weiteres Erfordernis ist, dass insbesondere der Hohlbohrer möglichst billig hergestellt werden kann. Dies deshalb, da der Hohlbohrer, insbesondere seine Materialabtragselemente, beim Gebrauch einem beträchtlichen Verschleiß unterliegt.

Ausgehend hiervon liegt der Erfindung die Aufgabe zugrunde, eine Bohrvorrichtung der eingangs genannten Art zu schaffen, bei der sich der Hohlbohrer ohne besondere Schwierigkeiten schnell und sicher an dem Bohrerhalter befestigen bzw. von diesem wegnehmen lässt. Außerdem sollen die mit der Herstellung des Hohlbohrers verbundenen Kosten möglichst niedrig sein.

Diese Aufgabe wird durch die Merkmale des Anspruchs 1 gelöst.

Auf diese Weise bildet das Rohrstück selbst die die Verbindung zum Bohrerhalter herstellende Befestigungspartie. In die Wandung des Rohrstücks müssen lediglich die Mitnahmeausnehmungen und die Rastlöcher eingearbeitet werden. Hierdurch bewirken die Mitnahmeausnehmungen zusammen mit den am Bohrerhalter angeordneten Mitnahmeelementen die Drehmitnahme des Hohlbohrers beim Betrieb der Handbohrmaschine. Die Rastlöcher dienen dagegen zusammen mit den in sie eingreifenden Rastkörpern zum festen Halten des Rohrstücks in axialer Richtung.

Das Zusammenstecken und Verriegeln des Hohlbohrers und des Bohrerhalters kann von Hand ohne Zuhilfenahme von Handwerkzeugen erfolgen. Dies lässt sich im Einzelnen auf unterschiedliche Weise verwirklichen.

Weitere zweckmäßige Ausgestaltungen sind in den Unteransprüchen angegeben.

Ein Ausführungsbeispiel der Erfindung wird nun anhand der Zeichnung beschrieben. Es zeigen:
- Fig. 1: eine erfindungsgemäße Bohrvorrichtung im axialen Halbschnitt in in axialer Richtung explodierter Darstellung,
- Fig. 2: die gleiche Bohrvorrichtung ohne die Zentrierbohreinheit nach dem Zusammenstecken des Bohrerhalters und des Hohlbohrers, wobei sich der Betätigungsring in seiner Lösestellung befindet, im axialen Halbschnitt,
- Fig. 3: die Anordnung nach Fig. 2 nach dem Verdrehen des Betätigungsrings in seine Spannstellung,

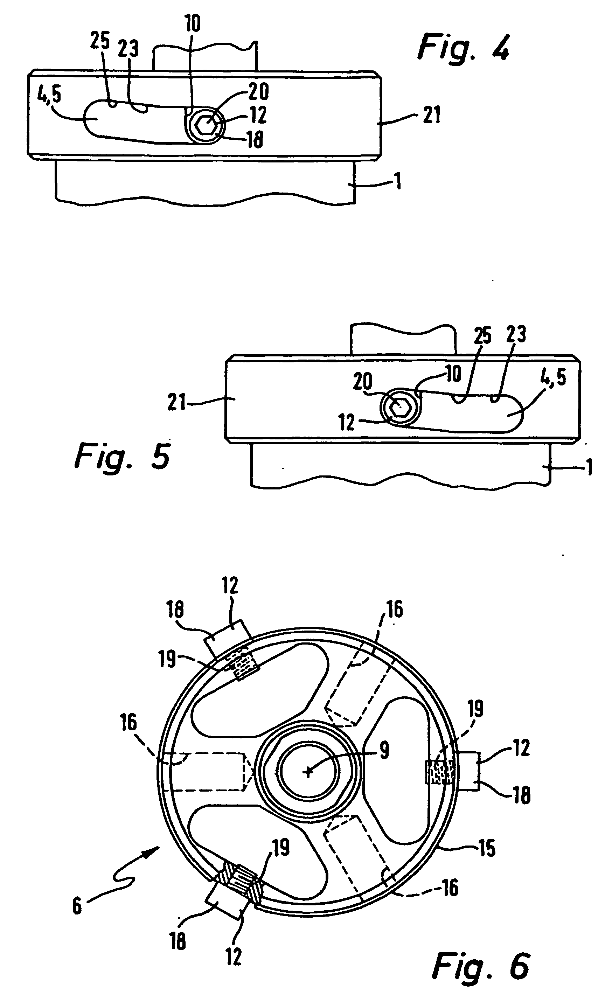

- Fig. 4: den Betätigungsring in seiner Lösestellung (Fig. 2) in Seitenansicht gemäß Pfeil IV in Fig. 2,
- Fig. 5: den Betätigungsring in seiner Spannstellung (Fig. 3) in Seitenansicht gemäß Pfeil V in Fig. 3,
- Fig. 6: den Bohrerhalter ohne den Betätigungsring und die Rastkörper in axialer Stirnansicht gemäß Pfeil VI in Fig. 1,
- Fig. 7: den Betätigungsring des Bohrerhalters in gesonderter Darstellung in entgegengesetzter axialer Stirnansicht gemäß Pfeil VII in Fig. 1,
- Fig. 8: den mit dem Bohrerhalter zu verbindenden Endbereich des Hohlbohrers in Schrägansicht und
- Fig. 9: eine Variante des Hohlbohrers in Seitenansicht.

Die aus der Zeichnung hervorgehende Bohrvorrichtung dient zum Einbringen von Bohrungen insbesondere in Mauerwerk oder Beton. Dabei kann es sich um Sackbohrungen zur Aufnahme beispielsweise von Steckdosen oder Verteilerdosen oder auch um durchgehende Bohrungen handeln. Diese Bohrungen werden mit einem Hohlbohrer 1 ausgeführt, der im Wesentlichen von einem Rohrstück 2 gebildet wird, das an seinem beim Betrieb dem zu bohrenden Werkstück zugewandten Ende stirnseitig an ihm angeordnete, über den Umfang verteilte Materialabtragselemente 3 aus Diamantmaterial aufweist. Die Materialabtragselemente 3 stehen in axialer Richtung vor das Rohrstück 2 vor und weisen eine etwas größere Wandstärke als das Rohrstück 2 auf. Der entgegengesetzte Endbereich 4 des Rohrstücks 2 bildet eine Befestigungspartie 5 und ist mit einem Bohrerhalter 6 lösbar verbindbar, der seinerseits an der Abtriebswelle einer Handbohrmaschine befestigt wird. Hierzu weist der Bohrerhalter 6 einen axial gerichteten Schaft 7 mit einem Innengewinde 8 zum Aufschrauben auf die nicht dargestellte Abtriebswelle der Handbohrmaschine auf. Im montierten Zustand ist der Bohrerhalter 6 drehfest mit der Abtriebswelle der Handbohrmaschine und der Hohlbohrer 1 drehfest mit dem Bohrerhalter 6 verbunden, sodass der Hohlbohrer 1 beim Betrieb um die Rotationsachse 9 rotiert.

Das Rohrstück 2 des Hohlbohrers 1 weist an seinem mit dem Bohrerhalter 6 verbindbaren Endbereich 4 über den Umfang verteilt angeordnete Mitnahmeausnehmungen 10 auf, die an der Rohrstück-Stirnseite 11 offen ausmünden. Den Mitnahmeausnehmungen 10 ist jeweils ein am Bohrerhalter 6 angeordnetes Mitnahmeelement 12 zugeordnet. Der Hohlbohrer 1 kann mit seinen Mitnahmeausnehmungen 10 in axialer Richtung auf die Mitnahmeelemente 12 des Bohrerhalters 6 gesteckt werden, wobei die in Umfangsrichtung gemessenen Abmessungen der Mitnahmeausnehmungen und der Mitnahmeelemente 12 einander entsprechen, sodass sich eine drehfeste Verbindung ergibt.

Ferner sind am mit dem Bohrerhalter 6 verbindbaren Endbereich 4 des Rohrstücks 2 ebenfalls über den Umfang verteilt angeordnete Rastlöcher 13 für den verriegelnden Eingriff von Rastkörpern 14 vorhanden, die am Bohrerhalter 6 angeordnet sind. Mit Hilfe der Rastlöcher 13 und der Rastkörper 14 wird der Hohlbohrer 1 in axialer Richtung am Bohrerhalter 6 fixiert.

Die Mitnahmeausnehmungen 10 und die Rastlöcher 13 sind in die Wandung des Rohrstücks 2 eingearbeitet.

Der Bohrerhalter 6 weist ein feststehend an seinen Schaft 7 angesetztes Innenteil 15 auf, das flanschartig an den Schaft 7 angesetzt ist. Das Innenteil 15 ist an seinem Außenumfang im Wesentlichen zylindrisch ausgebildet, wobei der Außendurchmesser des Innenteils 15 um ein Steckspiel kleiner als der Innendurchmesser des Endbereichs 4 des Rohrstücks 2 ist, sodass der Rohrstück-Endbereich 4 auf das Innenteil 15 gesteckt werden kann. Am Außenumfang des Innenteils 15 sind die bereits erwähnten Rastkörper 14 angeordnet, die nach außen hin federbelastet sind. Hierzu ist den Rastkörpern 14 jeweils eine radiale Sackbohrung 16 des Innenteils 15 zugeordnet, in der ein den jeweiligen Rastkörper 14 belastendes Federelement 17, zweckmäßigerweise in Gestalt einer Schraubenfeder, angeordnet ist. Die Rastkörper 14 werden zweckmäßigerweise von Rastkugeln gebildet, deren Durchmesser etwas kleiner als der Durchmesser der Sackbohrungen 16 ist, sodass die Rastkugeln in die Sackbohrungen passen. Die den Rastkörpern 14 zugeordneten Rastlöcher 13 des Rohrstücks 2 sind dementsprechend zweckmäßigerweise kreisrund.

Die Mitnahmeelemente 12 sind ebenfalls am Außenumfang des Innenteils 15 angeordnet und stehen in radialer Richtung von diesem ab. Dabei werden die Mitnahmeelemente 12 zweckmäßigerweise jeweils vom Kopfende 18 eines in das Innenteil 15 eingeschraubten Gewindebolzens 19 gebildet. Das Kopfende 18 weist einen kreisrunden Außenumfang auf. Es enthält ferner eine Betätigungseinrichtung zum Ansetzen eines Drehwerkzeugs, die beim Ausführungsbeispiel von einer in die Stirnseite des Kopfendes 18 eingelassenen Sechskantausnehmung 20 gebildet wird.

Zum Bohrerhalter 6 gehört des Weiteren ein Betätigungsring 21, der das Innenteil 15 unter Bildung eines umlaufenden Ringspaltes 22 umschließt. Zum Befestigen des Rohrstücks 2 am Bohrerhalter 6 wird das Rohrstück 2 mit seinem Endbereich 4 in axialer Richtung in den Ringspalt 22 gesteckt.

Am Betätigungsring 21 sind über den Umfang verteilt angeordnete, langlochartige Führungsschlitze 23 vorgesehen, die sich im Wesentlichen in Umfangsrichtung erstrecken und dabei mindestens teilweise etwas geneigt zur Umfangsrichtung verlaufen. Jedem Führungsschlitz 23 ist eines der Mitnahmeelemente 12 zugeordnet, das in den jeweiligen Führungsschlitz 23 eingreift. Die Führungsschlitze 23 durchsetzen die Wandung des Betätigungsrings 21 ganz, sodass die Mitnahmeelemente 12 von außen her zugänglich sind. Der Betätigungsring 21 ist, sieht man von den Mitnahmeelementen 12 ab, in axialer Richtung bewegbar am Innenteil 15 angeordnet.

Bei der Montage des Bohrerhalters 6 wird so vorgegangen, dass man den Betätigungsring 21 bei noch fehlenden Mitnahmeelementen 12 auf das Innenteil 15 steckt, wonach man die Mitnahmeelemente 12 durch die Ringspalte 22 hindurch in das Innenteil 15 einschraubt. Der Betätigungsring 21 ist dann auf den Mitnahmeelementen 12 gelagert.

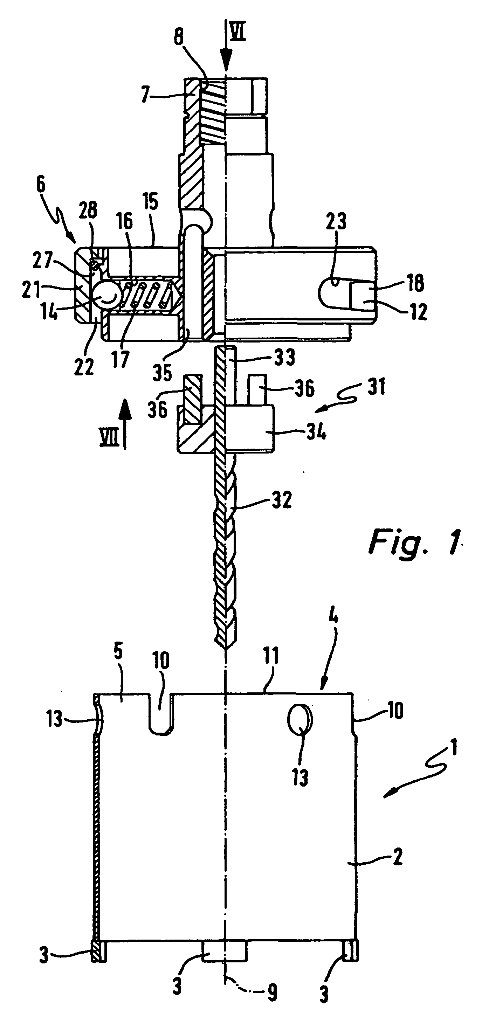

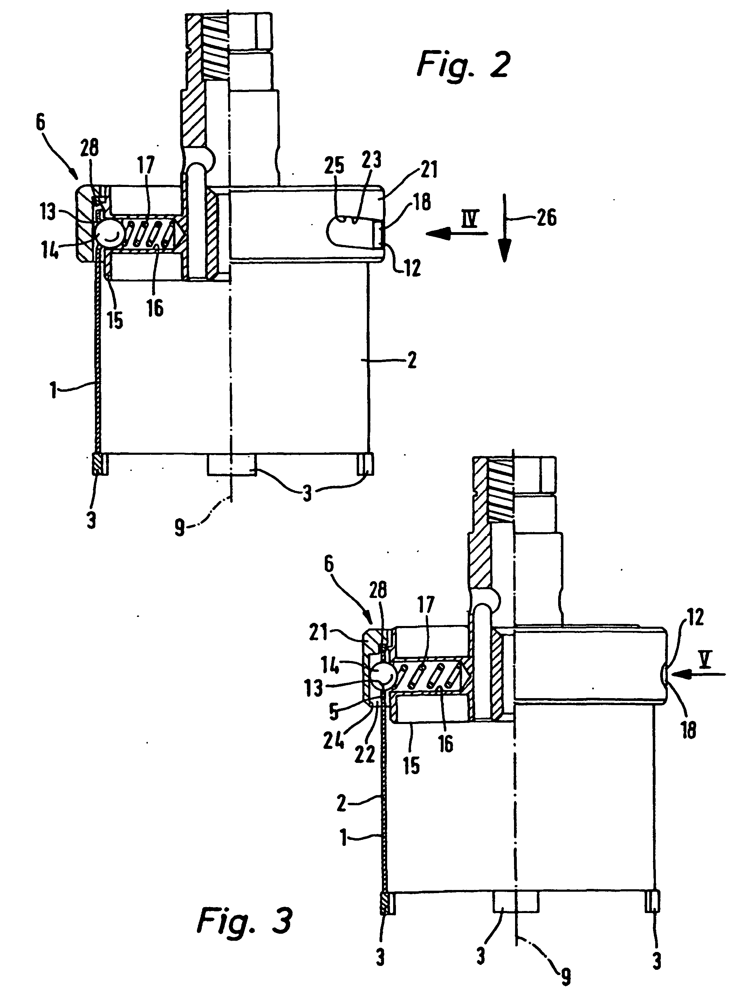

Der auf den Mitnahmeelementen 12 gelagerte Betätigungsring 21 ist zwischen einer Lösestellung (Fig. 1 und 2) und einer Spannstellung (Fig. 3) verdrehbar. Bei diesem Verdrehen wird der Betätigungsring 21 auf den Mitnahmeelementen 12 geführt. Befindet sich der Betätigungsring 21 in seiner Lösestellung, kann der Endbereich 4 des Hohlbohrers 1 in den Ringspalt 22 gesteckt werden. Dabei werden die Rastkörper 14 von der Stirnseite 11 des Rohrstücks 2 entgegen der Kraft der Federelemente 17 in radialer Richtung nach innen verdrängt, bis die Rastkörper 14 zu den Rastlöchern 13 des Rohrstücks 2 gelangen und in diese federnd einschnappen. Die Rastkörper 14 stützen sich dann wieder, wie vor dem Einstecken des Rohrstücks 2, an der Innenseite des Betätigungsrings 21 ab, wie aus den Fig. 1 und 2 hervorgeht. Dabei ragen die Rastkörper 14 weniger weit als ihrem Radius entsprechend in die Rastlöcher 13, sodass die Rastkörper 14 sowohl beim Einstecken als auch beim Herausziehen des Rohrstücks 2 in die jeweilige Sackbohrung 16 verdrängt werden.

Bei dem Einstecken des Rohrstücks 2 gelangen die Mitnahmeelemente 12 gleichzeitig in die von axial gerichteten Längsschlitzen gebildeten Mitnahmeausnehmungen 10 des Rohrstücks 2, sodass der Hohlbohrer 1 verdrehfest am Bohrerhalter 6 gehalten wird.

In der Lösestellung des Betätigungsrings 21 ist der Hohlbohrer 1 in axialer Richtung noch nicht fixiert. Um die axiale Fixierung zu erreichen, weist der Betätigungsring 21 an seinem Innenumfang über den Umfang verteilt angeordnete Vertiefungsbereiche 24 auf, die jeweils einem Rastkörper 14 des Innenteils 15 zugeordnet sind. Diese Vertiefungsbereiche 24 liegen in der Lösestellung des Betätigungsrings 21 in Umfangsrichtung neben den Rastkörpern 14, sodass diese in der Lösestellung abseits der Vertiefungsbereiche 24 am Betätigungsring 21 anliegen. Verdreht man den Betätigungsring 21 in seine Spannstellung - der Betätigungsring 21 wird dabei an den Mitnahmeelementen 12 geführt -, gelangen die Vertiefungsbereiche 24 jeweils zum benachbarten Rastkörper 14, sodass sich die Rastkörper 14 unter der Federkraft weiter nach radial außen verlagern und am Grund der Vertiefungsbereiche 24 anliegen. Hierdurch greifen die Rastkörper 14 weiter durch die Rastlöcher 13 hindurch, sodass sich ein das Rohrstück 2 in axialer Richtung sichernder Verriegelungseingriff ergibt. Zieht man in dieser Spannstellung des Betätigungsrings 21 am Hohlbohrer 1 nach außen, stützt er sich mit dem Rand seiner Rastlöcher 13 an den Rastkörpern 14 ab, ohne dass diese nach radial innen verdrängt werden können.

Bereits oben wurde erwähnt, dass die Führungsschlitze 23 des Betätigungsrings 21 zumindest teilweise mit Bezug auf die Umfangsrichtung etwas geneigt sind. Mit dieser Maßnahme wird erreicht, dass der Hohlbohrer 1 in der Spannstellung des Betätigungsrings 21 in axialer Richtung nicht nur festgehalten, sondern auch festgespannt wird.

Beim Verdrehen des Betätigungsrings 21 läuft dieser auf den Mitnahmeelementen 12. Gelangen die Führungsschlitze 23, ausgehend von der Lösestellung, mit ihrem in Richtung vom Hohlbohrer 1 weg geneigten Bereich 25 zu den Mitnahmeelementen 12, verlagert sich der Betätigungsring 21 relativ zum Innenteil 15 in axialer Richtung. Der Betätigungsring 21 schraubt sich auf den Mitnahmeelementen 12 sozusagen nach vorne. Bei diesem Vorbewegen in Richtung gemäß Pfeil 26 bewegt sich eine am Betätigungsring 21 angeordnete, den Ringspalt 22 in der Tiefe begrenzende Anschlagfläche 27 gegen die Stirnseite 11 des Hohlbohrers 1, sodass der Hohlbohrer 1 in axialer Richtung verspannt wird. Dabei drückt der Betätigungsring 21 über seine Anschlagfläche 27 das Rohrstück 2 mit dem Rand seiner Rastlöcher 13 fest gegen die Rastkörper 14.

Die Anschlagfläche 27 wird zweckmäßigerweise von einem in den Ringspalt 22 eingesetzten Reibring 28 gebildet, der sich an einer Stufe am Innenumfang des Betätigungsrings 21 abstützt. Der Reibring 28 kann beispielsweise aus gummielastischem Material bestehen. Mit dem Reibring 28 wird die Sicherheit noch weiter erhöht, sodass sich der Betätigungsring 21 beim Bohrvorgang nicht unabsichtlich in die Lösestellung zurückdrehen kann.

Zum Wegnehmen des Hohlbohrers 1 vom Bohrerhalter 6 muss der Betätigungsring 21 in umgekehrter Richtung in die Lösestellung verdreht werden, sodass sich der Hohlbohrer 1 wegziehen lässt.

Die Anzahl der vorhandenen Mitnahmeausnehmungen 10 ist prinzipiell beliebig. Zweckmäßigerweise sind drei solche Mitnahmeausnehmungen 10 vorhanden, denen jeweils ein Mitnahmeelement 12 am Innenteil 15 zugeordnet ist.

Die Anzahl der über den Umfang verteilten Rastlöcher 13 des Rohrstücks 2, denen jeweils ein Rastkörper 14 am Innenteil 15 zugeordnet ist, ist ebenfalls prinzipiell beliebig und dabei außerdem unabhängig von der Anzahl der vorhandenen Mitnahmeausnehmungen 10 und Mitnahmeelemente 12. Zweckmäßigerweise entspricht jedoch die Anzahl der Rastlöcher 13 und somit auch der Rastkörper 14 der Anzahl der Mitnahmeausnehmungen 10 mit jeweils zugeordnetem Mitnahmeelement 12.

Die Rastlöcher 13 sind in Umfangsrichtung gesehen versetzt zu den Mitnahmeausnehmungen 10 angeordnet. Sind gleich viele Rastlöcher 13 wie Mitnahmeausnehmungen 10 vorhanden, befindet sich zwischen jeweils zwei Mitnahmeausnehmungen 10 ein Rastloch 13. Aufgrund dieses abwechslungsweisen Anordnens der Mitnahmeausnehmungen 10 und der Rastlöcher 13 (die Mitnahmeelemente 12 und die Rastkörper 14 sind in entsprechender Weise am Innenteil 15 angeordnet) gelangen die Rastlöcher 13 stets zu den Rastkörpern 14, und zwar unabhängig davon, in welcher Drehlage der Hohlbohrer 1 mit seinen Mitnahmeausnehmungen 10 auf die Mitnahmeelemente 12 gesteckt wird.

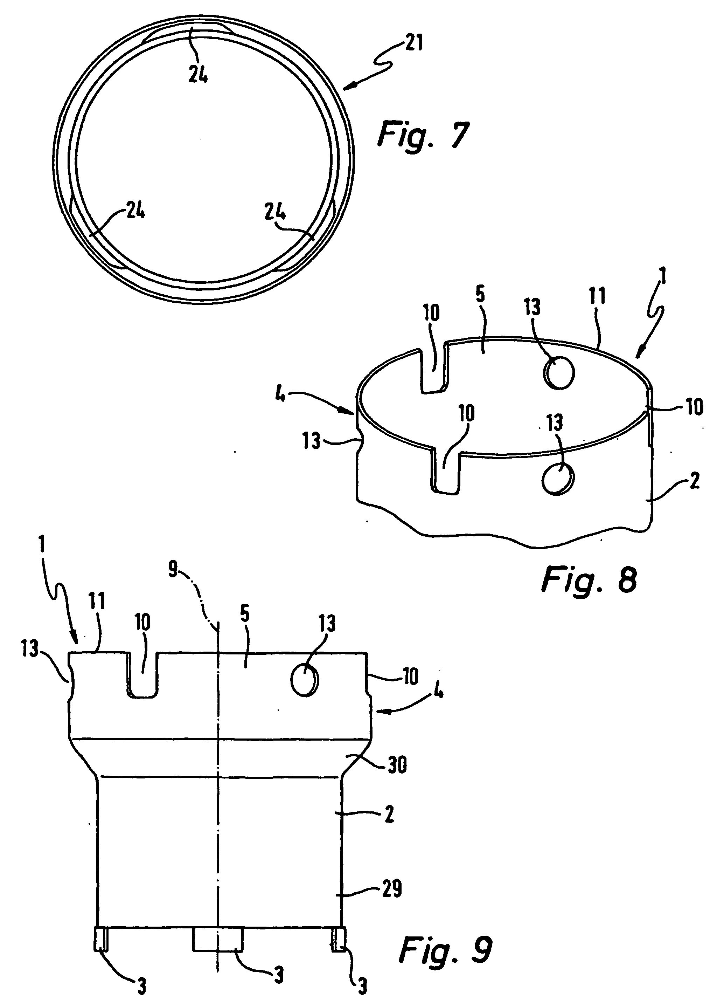

Das Rohrstück 2 des aus den Fig. 1 bis 3 hervorgehenden Hohlbohrers 1 weist einen über die gesamte Länge durchgehend gleichen Durchmesser auf. Alternativ hierzu ist es jedoch möglich, dass das Rohrstück 2 anschließend an seine die Rastlöcher 13 und die Mitnahmeausnehmungen 10 aufweisende Befestigungspartie 5 eine die Materialabtragselemente 3 tragende Bohrpartie 29 mit anderem Durchmesser als die Befestigungspartie 5 aufweist (siehe Fig. 9). Die Befestigungspartie 5 bleibt unabhängig vom Durchmesser der Bohrpartie 29 die gleiche. Zwischen der Befestigungspartie 5 und der Bohrpartie 29 kann, wie aus Fig. 9 hervorgeht, ein Übergangsbereich 30 vorhanden sein. Es versteht sich, dass der Durchmesser der Bohrpartie 29 entgegen Fig. 9 auch größer als der Durchmesser der Befestigungspartie 5 sein kann.

Aus Fig. 1 geht noch eine ansonsten im vorliegenden Zusammenhang nicht weiter interessierende Zentrierbohreinheit 31 hervor, die einen im montierten Zustand in axialer Richtung vor den Hohlbohrer 1 vorstehenden Zentrierbohrer 32 enthält, dessen dem Bohrerhalter 6 zugewandter Schaftbereich 33 durch ein am Bohrerhalter 6 festzulegendes Haltestück 34 gesteckt und in der gewünschten Lage mittels einer nicht dargestellten Klemmschraube fixierbar ist. Das Haltestück 34 weist zwei jeweils in eine Aufnahmebohrung 35 des Bohrerhalter-Innenteils 15 gesteckte Steckzapfen 36 auf, die die Zentrierbohreinheit 31 am Bohrerhalter 6 zentrieren. Der axiale Zusammenhalt des Haltestücks 34 und des Bohrerhalter-Innenteils 15 wird durch Magnetkraft erreicht.

## Patentansprüche

1. Bohrvorrichtung zum Einbringen von Bohrungen insbesondere in Mauerwerk oder Beton, mit einem Hohlbohrer (1), der ein Rohrstück (2) aufweist, das an seinem einen Ende Materialabtragsstücke (3) trägt und dessen entgegengesetzter Endbereich (4) lösbar mit einem an der Abtriebswelle einer Handbohrmaschine zu befestigenden Bohrerhalter (6) verbindbar ist, wobei das Rohrstück (2) des Hohlbohrers (1) an seinem mit dem Bohrerhalter (6) verbindbaren Endbereich (4) über den Umfang verteilt angeordnete, an der Rohrstück-Stirnseite (11) offen mündende Mitnahmeausnehmungen (10) zum axialen Aufstecken des Hohlbohrers (1) auf Mitnahmeelemente (12) am Bohrerhalter (6) und über den Umfang verteilt angeordnete Rastmittel (13) zum verriegelnden Zusammenwirken mit am Bohrerhalter (6) angeordneten Rastkörpern (14) aufweist, **dadurch gekennzeichnet, dass** die Rastmittel als Rastlöcher (13) ausgebildet sind und der Bohrerhalter (6) ein feststehend an ihm angeordnetes Innenteil (15) und einen zwischen einer Lösestellung und einer Spannstellung verdrehbar am Innenteil (15) gelagerten, das Innenteil (15) unter Bildung eines umlaufenden Ringspaltes (22) zum Einstecken des Endbereichs (4) des Rohrstücks (2) umschließenden Betätigungsring (21) enthält, wobei am Außenumfang des Innenteils (15) die nach radial außen federbelasteten, den Rastlöchern (13) des Rohrstücks (2) zugeordneten Rastkörper (14) und die in radialer Richtung abstehenden, den Mitnahmeausnehmungen (10) des Rohrstücks (2) zugeordneten Mitnahmeelemente (12) angeordnet sind und der Betätigungsring (21) im Wesentlichen in Umfangsrichtung und dabei mindestens teilweise etwas geneigt zur Umfangsrichtung verlaufende Führungsschlitze (23), in die jeweils ein Mitnahmeelement (12) eingreift, sodass der Betätigungsring (21) bei seinem Verdrehen an den Mitnahmeelementen (12) geführt ist, und an seinem Innenumfang jeweils einem Rastkörper (14) des Innenteils (15) zugeordnete Vertiefungsbereiche (24) aufweist, derart, dass in der Lösestellung des Betätigungsrings (21) das Rohrstück (2) unter vorübergehendem radialem Verdrängen der Rastkörper (14) und Eintauchen der Mitnahmeelemente (12) in die Mitnahmeausnehmungen (10) bis zum Einschnappen der Rastkörper (14) in die Rastlöcher (13) in den Ringspalt (22) steckbar ist, wobei sich die Rastkörper (14) abseits der Vertiefungsbereiche (24) am Betätigungsring (21) abstützen, und der Betätigungsring (21) bei seinem Verdrehen in die Spannstellung über den zur Umfangsrichtung geneigten Bereich (25) der Führungsschlitze (23) und die Mitnahmeelemente (12) in axialer Richtung relativ zum Innenteil (15) verlagert wird, sodass eine am Betätigungsring (21) angeordnete, den Ringspalt (22) in der Tiefe begrenzende Anschlagfläche (27) gegen die Stirnseite (11) des Rohrstücks (2) gespannt wird, wobei die Vertiefungsbereiche (24) des Betätigungsrings (21) bei dessen Verdrehen in die Spannstellung zu den Rastkörpern (14) gelangen, sodass sich diese radial nach außen verlagern und mit das Rohrstück (2) in axialer Richtung sicherndem Verriegelungseingriff in die Rastlöcher (13) eingreifen.

2. Bohrvorrichtung nach Anspruch 1, **dadurch gekennzeichnet, dass** am Rohrstück (2) des Hohlbohrers (1) drei Mitnahmeausnehmungen (10) angeordnet sind, denen jeweils ein Mitnahmeelement (12) am Innenteil (15) zugeordnet ist.

3. Bohrvorrichtung nach Anspruch 1 oder 2, **dadurch gekennzeichnet, dass** die Anzahl der Rastlöcher (13) des Rohrstücks (2) des Hohlbohrers (1), denen jeweils ein Rastkörper (14) am Innenteil (15) zugeordnet ist, der Anzahl der Mitnahmeausnehmungen (10), denen jeweils ein Mitnahmeelement (12) am Innenteil (15) zugeordnet ist, entspricht.

4. Bohrvorrichtung nach Anspruch 3, **dadurch gekennzeichnet, dass** die Rastlöcher (13) und die Mitnahmeausnehmungen (10) am Rohrstück (2) über den Umfang hinweg abwechslungsweise angeordnet sind.

5. Bohrvorrichtung nach einem der Ansprüche 1 bis 4, **dadurch gekennzeichnet, dass** die Rastkörper (14) Rastkugeln sind.

6. Bohrvorrichtung nach einem der Ansprüche 1 bis 5, **dadurch gekennzeichnet, dass** den Rastkörpern (14) jeweils eine radiale Sackbohrung (16) am Innenteil (15) zugeordnet ist, in der ein den jeweiligen Rastkörper (14) belastendes Federelement (17) angeordnet ist.

7. Bohrvorrichtung nach einem der Ansprüche 1 bis 6, **dadurch gekennzeichnet, dass** die Mitnahmeelemente (12) jeweils vom Kopfende (18) eines in das Innenteil (15) eingeschraubten Gewindebolzens (19) gebildet werden.

8. Bohrvorrichtung nach einem der Ansprüche 1 bis 7, **dadurch gekennzeichnet, dass** die Führungsschlitze (23) die Wandung des Betätigungsrings (21) ganz durchsetzen, sodass die Mitnahmeelemente (12) von außen her zugänglich sind.

9. Bohrvorrichtung nach einem der Ansprüche 1 bis 8, **dadurch gekennzeichnet, dass** die Anschlagfläche (27) von einem in den Ringspalt (22) eingesetzten Reibring (28) gebildet wird.

10. Bohrvorrichtung nach einem der Ansprüche 1 bis 9, **dadurch gekennzeichnet, dass** die Rastlöcher (13) des Rohrstücks (2) kreisrund sind.

11. Bohrvorrichtung nach einem der Ansprüche 1 bis 10, **dadurch gekennzeichnet, dass** die Mitnahmeausnehmungen (10) des Rohrstücks (2) von axial gerichteten Längsschlitzen gebildet werden.

12. Bohrvorrichtung nach einem der Ansprüche 1 bis 11, **dadurch gekennzeichnet, dass** das Rohrstück (2) einen durchgehend gleichen Durchmesser aufweist.

13. Bohrvorrichtung nach einem der Ansprüche 1 bis 11, **dadurch gekennzeichnet, dass** das Rohrstück (2) anschließend an seine die Rastlöcher (13) und die Mitnahmeausnehmungen (10) aufweisende Befestigungspartie (5) eine die Materialabtragselemente (3) tragende Bohrpartie (29) mit anderem Durchmesser als die Befestigungspartie (5) aufweist.

## Claims

1. Drilling jig for producing holes, in particular in masonry and concrete, with a hollow drill (1) featuring a tubular piece (2) with material removal elements (3) at one end, while the opposite end area (4) can be releasably connected to a drill holder (6) to be attached to the drive shaft of a hand drill, wherein the tubular piece (2) of the hollow drill (1) is provided, in the end area (4) which can be connected to the drill holder (6), with driving recesses (10) distributed over its circumference and terminating at the end face (11) of the tubular piece for axially fitting the hollow drill (1) to driving elements (12) on the drill holder (6), and with locking means (13) distributed over its circumference for acting together in an interlocking fashion with locking bodies (14) located on the drill holder (6), **characterised in that** the locking means are designed as locking holes (13), and **in that** the drill holder (6) comprises a fixed inner part (15) and an operating ring (21) mounted on the inner part (15) for rotation between a release position and a clamping position and encompassing the inner part (15) while forming a continuous annular gap (22) for the insertion of the end area (4) of the tubular piece (2), with locking bodies (14) spring-loaded radially outwards and assigned to locking holes (13) of the tubular piece (2) and with driving elements (12) projecting radially and assigned to driving recesses (10) of the tubular piece (2) being located on the outer circumference of the inner part (15), and with the operating ring (21) having guide slots (23) extending essentially in the circumferential direction and slightly inclined relative thereto, each of which engages a driving element (12), so that the operating ring (21), when being rotated, is guided on the driving elements (12), and having recessed areas (24) at its inner circumference, each of which is assigned to a locking body (14) of the inner part (15), with the result that the tubular piece (2), in the release position of the operating ring (21), can be inserted into the annular gap (22) until the locking bodies (14) catch in the locking holes (13) while the locking bodies (14) are temporarily displaced radially and the driving elements (12) dip into the driving recesses (10), wherein the locking bodies (14) are supported on the operating ring (21) away from the recessed areas (24) and the operating ring (21), while being rotated into its clamping position, is displaced relative to the inner part (21) via the area (25) of the guide slots (23) which is inclined relative to the circumferential direction and via the driving elements (12), so that a stop surface (27) located on the operating ring (21) and limiting the depth of the annular gap (22) is clamped against the end face (11) of the tubular piece (2), the recessed areas (24) of the operating ring (21) moving into clamping position relative to the locking bodies (14) when the ring is rotated, causing them to be displaced radially outwards and engage the locking holes (13) to secure the tubular piece (2) in the axial direction.

2. Drilling jig according to claim 1, **characterised in that** three driving recesses (10) are provided on the tubular piece (2) of the hollow drill (1), to each of which is assigned a driving element (12) on the inner part (15).

3. Drilling jig according to claim 1 or 2, **characterised in that** the number of locking holes (13) of the tubular piece (2) of the hollow drill (1), to each of which is assigned a driving element (12) on the inner part (15), is equal to the number of driving recesses (10), to each of which is assigned a driving element (12) on the inner part (15).

4. Drilling jig according to claim 3, **characterised in that** the locking holes (10) and the driving recesses (10) alternate along the circumference of the tubular piece (2).

5. Drilling jig according to any of claims 1 to 4, **characterised in that** the locking bodies (14) are locking balls.

6. Drilling jig according to any of claims 1 to 5, **characterised in that** a radial blind hole (16) in the inner part (15) is assigned to each locking body (14), with a spring element (17) loading the locking body (14) located therein.

7. Drilling jig according to any of claims 1 to 6, **characterised in that** each of the driving elements (12) is represented by the head end (18) of a bolt (19) threaded into the inner part (15).

8. Drilling jig according to any of claims 1 to 7, **characterised in that** the guide slots (23) pass through the entire wall of the operating ring (21), making the driving elements (12) accessible from the outside.

9. Drilling jig according to any of claims 1 to 8, **characterised in that** the stop surface (27) is represented by a friction ring (28) installed into the annular gap (22).

10. Drilling jig according to any of claims 1 to 9, **characterised in that** the locking holes (13) of the tubular piece (2) are circular.

11. Drilling jig according to any of claims 1 to 10, **characterised in that** the driving recesses (10) of the tubular piece (2) are represented by axially oriented longitudinal slots.

12. Drilling jig according to any of claims 1 to 11, **characterised in that** the tubular piece (2) has the same diameter throughout.

13. Drilling jig according to any of claims 1 to 11, **characterised in that** the tubular piece (2), adjoining its mounting section (5) with the locking holes (13) and the driving recesses (10), has a drilling section (29) supporting the material removal elements (3) with a diameter different from that of the mounting section (5).

## Revendications

1. Dispositif de forage pour pratiquer des trous en particulier dans un ouvrage de maçonnerie ou dans le béton, comportant un foret creux (1) qui présente une pièce tubulaire (2) laquelle porte à l'une de ses extrémités des pièces d'enlèvement de matière (3) et dont la zone terminale (4) opposée peut être reliée de manière séparable à un porte-foret (6) à fixer sur l'arbre de sortie d'une foreuse manuelle, la pièce tubulaire (2) du foret creux (1) présentant, dans sa zone terminale (4) pouvant être reliée au porte-foret (6), des évidements d'entraînement (10) répartis sur son pourtour et débouchant ouverts sur la face frontale (11) de la pièce tubulaire, pour l'emboîtement axial du foret creux (1) sur des éléments d'entraînement (12) prévus sur le porte-foret (6), ainsi que des moyens d'encliquetage (13) répartis sur son pourtour, pour la coopération de verrouillage avec des corps d'encliquetage (14) disposés sur le porte-foret (6), **caractérisé en ce que** les moyens d'encliquetage sont réalisés comme trous d'encliquetage (13) et **en ce que** le porte-foret (6) contient une partie intérieure (15) disposée de manière fixe sur celui-ci et une bague d'actionnement (21) montée tournante sur la partie intérieure (15), entre une position de déverrouillage et une position de serrage, et qui entoure la partie intérieure (15) en formant une fente annulaire (22) périphérique pour l'enfichage de la zone terminale (4) de la pièce tubulaire (2), sur le pourtour extérieur de la partie intérieure (15) étant disposés les corps d'encliquetage (14) soumis radialement vers l'extérieur à l'action d'un ressort, associés aux trous d'encliquetage (13) de la pièce tubulaire (2) ainsi que les éléments d'entraînement (12) dépassant dans la direction radiale et associés aux évidements d'entraînement (10) de la pièce tubulaire (2), et la bague d'actionnement (21) présentant des fentes de guidage (23) s'étendant sensiblement dans la direction périphérique et ici au moins partiellement légèrement inclinées par rapport à la direction périphérique, dans chacune desquelles s'engage un élément d'entraînement (12), de sorte que la bague d'actionnement (21) est guidée lors de sa rotation sur les éléments d'entraînement (12), et présentant sur son pourtour intérieur des zones de renfoncement (24) associées respectivement à un corps d'encliquetage (14) de la partie intérieure (15), de manière que dans la position de déverrouillage de la bague d'actionnement (21), la pièce tubulaire (2) peut être enfichée dans la fente annulaire (22), avec déplacement radial provisoire des corps d'encliquetage (14) et pénétration des éléments d'entraînement (12) dans les évidements d'entraînement (10) jusqu'à ce que les corps d'encliquetage (14) s'encliquettent dans les trous d'encliquetage (13), les corps d'encliquetage (14) prenant appui sur le côté des zones de renfoncement (24) contre la bague d'actionnement (21), et la bague d'actionnement (21) étant déplacée, lors de sa rotation dans la position de serrage, sur la zone (25), inclinée par rapport à la direction périphérique, des fentes de guidage (23), et les éléments d'entraînement (12) étant déplacés dans la direction axiale par rapport à la partie intérieure (15), de sorte qu'une surface de butée (27) disposée sur la bague d'actionnement (21) et limitant la profondeur de la fente annulaire (22) est serrée contre la face frontale (11) de la pièce tubulaire (2), les zones de renfoncement (24) de la bague d'actionnement (21) parvenant, lors de sa rotation dans la position de serrage, jusqu'aux corps d'encliquetage (14), de sorte que ceux-ci se déplacent radialement vers l'extérieur et s'engagent dans les trous d'encliquetage (13), avec un engagement de verrouillage bloquant la pièce tubulaire (2) dans la direction axiale.

2. Dispositif de forage selon la revendication 1, **caractérisé en ce que** sur la pièce tubulaire (2) du foret creux (1) sont disposés trois évidements d'entraînement (10) à chacun desquels est associé un élément d'entraînement (12) sur la partie intérieure (15).

3. Dispositif de forage selon la revendication 1 ou 2, **caractérisé en ce que** le nombre de trous d'encliquetage (13) de la pièce tubulaire (2) du foret creux (1), à chacun desquels est associé un corps d'encliquetage (14) sur la partie intérieure (15), correspond au nombre d'évidements d'entraînement (10) à chacun desquels est associé un élément d'entraînement (12) sur la partie intérieure (15).

4. Dispositif de forage selon la revendication 3, **caractérisé en ce que** les trous d'encliquetage (13) et les évidements d'entraînement (10) sont disposés alternativement sur tout le pourtour de la pièce tubulaire (2).

5. Dispositif de forage selon l'une des revendications 1 à 4, **caractérisé en ce que** les corps d'encliquetage (14) sont des billes d'encliquetage.

6. Dispositif de forage selon l'une des revendications 1 à 5, **caractérisé en ce qu'**à chacun des corps d'encliquetage (14) est associé un trou borgne radial (16) formé sur la partie intérieure (15), dans lequel est disposé un élément ressort (17) sollicitant le corps d'encliquetage (14) respectif.

7. Dispositif de forage selon l'une des revendications 1 à 6, **caractérisé en ce que** les éléments d'entraînement (12) sont formés chacun par l'extrémité de tête (18) d'un boulon fileté (19) vissé dans la partie intérieure (15).

8. Dispositif de forage selon l'une des revendications 1 à 7, **caractérisé en ce que** les fentes de guidage (23) traversent entièrement la paroi de la bague d'actionnement (21), de sorte que les éléments d'entraînement (12) sont accessibles depuis l'extérieur.

9. Dispositif de forage selon l'une des revendications 1 à 8, **caractérisé en ce que** la surface de butée (27) est formée par un anneau de friction (28) inséré dans la fente annulaire (22).

10. Dispositif de forage selon l'une des revendications 1 à 9, **caractérisé en ce que** les trous d'encliquetage (13) de la pièce tubulaire (2) sont circulaires.

11. Dispositif de forage selon l'une des revendications 1 à 10, **caractérisé en ce que** les évidements d'entraînement (10) de la pièce tubulaire (2) sont formés par des fentes longitudinales orientées axialement.

12. Dispositif de forage selon l'une des revendications 1 à 11, **caractérisé en ce que** la pièce tubulaire (2) présente un diamètre constant d'un bout à l'autre.

13. Dispositif de forage selon l'une des revendications 1 à 11, **caractérisé en ce que** la pièce tubulaire (2) présente à la suite de sa partie de fixation (5), présentant les trous d'encliquetage (13) et les évidements d'entraînement (10), une partie de forage (29) portant les éléments d'enlèvement de matière (3), avec un diamètre différent de celui de la partie de fixation (5).
